Europäisches Patentamt

European Patent Office

Office européen des brevets

(19)

(11) EP 0 568 430 B1

(12) # FASCICULE DE BREVET EUROPEEN

(45) Date de publication et mention
de la délivrance du brevet:
**10.07.1996 Bulletin 1996/28**

(51) Int Cl.6: **G21F 9/34**, G21F 9/36,
C09K 17/00, E02D 3/12

(21) Numéro de dépôt: **93401062.0**

(22) Date de dépôt: **23.04.1993**

(54) **Matériau de colmatage, procédé de fabrication de ce matériau de colmatage et procédé de mise en place de ce matériau sur un site de stockage de conteneurs**

Verstopfungsmaterial, sein Herstellungsverfahren und Sitzung dieses Materials auf einem Lager für Behälter

Clogging material, process for manufacturing the same and method for placing this material on a disposal site for containers

(84) Etats contractants désignés:
**BE CH DE DK ES GB GR IE IT LI LU NL PT SE**

(30) Priorité: **27.04.1992 FR 9205167**

(43) Date de publication de la demande:
**03.11.1993 Bulletin 1993/44**

(73) Titulaire: **COMMISSARIAT A L'ENERGIE ATOMIQUE**
**75015 Paris (FR)**

(72) Inventeurs:
• **Dardaine, Michel**
**F-91390 Morsang sur Orge (FR)**
• **Martin, Pedro Luis Martin**
**E-28039 Madrid (ES)**

• **Volckaert, Geert**
**B-9860 Oosterzele (BE)**

(74) Mandataire: **Dubois-Chabert, Guy et al**
**c/o BREVATOME**
**25, rue de Ponthieu**
**75008 Paris (FR)**

(56) Documents cités:
EP-A- 0 390 375        DE-A- 1 965 849
FR-A- 2 628 255        GB-A- 2 128 801
US-A- 4 242 140

• DATABASE WPIL Derwent Publications Ltd., London, GB; AN 86-165360 & JP-A-61 097 600
• DATABASE WPIL Derwent Publications Ltd., London, GB; AN 86-165359 & JP-A-61 097 599

**Description**

La présente invention concerne un matériau de colmatage, un procédé de fabrication de ce matériau, ainsi qu'un procédé de mise en place de ce matériau sur un site de stockage de conteneurs contenant par exemple, des déchets radioactifs.

Au cours de l'exploitation de l'énergie nucléaire, on obtient des matériaux combustibles irradiés qu'il est nécessaire de stocker dans un confinement adapté après qu'ils aient ou non été retraités. Le retraitement consiste à séparer les produits qui peuvent être réutilisés, des produits qui doivent être considérés comme des déchets. Ces déchets de très haute activité sont généralement mis sous forme de verres borosilicatés par une vitrification adaptée. Ce procédé permet de réduire, de façon très importante, les volumes à stocker. Ces déchets ainsi traités sont alors placés dans des conteneurs, généralement métalliques, qui sont ensuite stockés en couches géologiques profondes.

En effet, ces déchets, même après le retraitement, contiennent toujours des émetteurs alpha, béta et gamma, ce qui explique qu'ils doivent être stockés en profondeur dans le sol, dans des formations géologiques adaptées, par exemple : massif granitique, dôme de sel ou formation argileuse. La rétention des radionucléides est alors assurée d'une part, par le conteneur et d'autre part, par le site géologique dans lequel est réalisée l'implantation de ces déchets.

Dans le cadre des projets de stockage des déchets radioactifs de très haute activité, dans une formation géologique profonde, les organismes de différents pays européens, chargés de la mise en oeuvre et de la gestion de ces stockages, ont étudié plusieurs possibilités. Ces possibilités de stockage sont les suivantes :

- puits de stockage de petit diamètre (environ 0,5 m), ou de grand diamètre (1 à 1,50 m), ou
- tunnels de stockage, d'un diamètre voisin de 2 mètres.

Dans les deux cas, les puits ou les tunnels sont reliés à l'extérieur par des galeries d'accès.

Le stockage définitif consiste à placer les conteneurs de déchets radioactifs dans des puits ou des galeries, puis à remplir les vides résiduels existant entre les parois de ces puits ou galeries et les conteneurs, par un matériau de colmatage. Par ailleurs, il est également nécessaire de reboucher les galeries d'accès avec des matériaux de colmatage.

On connaît comme matériau de colmatage des ciments ou des mortiers qui sont introduits, sous forme pulvérulente, dans l'espace entre les conteneurs et les parois du puits ou de la galerie et qui durcissent au contact de l'eau de façon à former un solide continu. Toutefois, bien que le ciment présente une bonne imperméabilité à l'eau et soit mécaniquement très résistant, il est possible à l'issue d'un séisme par exemple, qu'une fissure apparaisse dans le ciment. L'eau peut alors passer en direction des conteneurs. Ceux-ci, s'ils se sont partiellement désagrégés ou détruits au cours du temps, peuvent laisser échapper des radionucléides qui risquent alors d'être entraînés par l'écoulement d'eau. En outre, lorsque les conteneurs contiennent des déchets très hautement radioactifs, ces derniers dégagent une énergie calorifique telle que la température à leur voisinage dépasse 100°C. Il n'est alors pas possible d'utiliser des ciments qui se dégradent en un temps beaucoup plus court que la durée de stockage nécessaire à un bon confinement.

Afin de remédier à cet inconvénient, on utilise généralement comme matériau de colmatage des argiles gonflantes de la famille des smectites. Ces argiles ont pour fonction d'une part, de ralentir les transferts d'eau de la roche d'accueil vers le conteneur et d'autre part, de minimiser les transferts de radioéléments en sens inverse, en exerçant, en fonction de leur densité et de leur degré de saturation en eau, des pressions de gonflement de plusieurs dizaines de MPa.

Le document EP-A-0 390 375 décrit un tel matériau de colmatage comprenant un mélange de 20 à 80% en volume de sable, de 10 à 40% en volume d'argile bentonite, de 10 à 40% en volume de terre de FULLER et de moins de 25% en volume d'un matériau absorbant les radionucléides.

On connaît également deux types de matériau de colmatage, d'après un article de R. PUSCH, A. JACOBSSON et A. BERGSTRÖM, intitulé "Bentonite-based buffer substances for isolating radioactive waste product at the great depths in rock", (substances tampon à base de bentonite pour l'isolation des déchets radioactifs à de grandes profondeurs dans la roche) présenté à OTANIEMI en Finlande au cours d'un congrès organisé par l'IAEA (l'Agence Internationale pour l'Energie Atomique), 1979, pp. 487-503. Cet article propose tout d'abord d'utiliser une argile pure hautement compactée. Toutefois, pour compacter les argiles pures à une densité sèche de 2,00, il faut les soumettre à une contrainte uniaxiale de plusieurs dizaines de MPa. Or, cet article ne propose aucun procédé industriel de densification et aucun procédé de mise en place de l'argile in situ.

Cet article propose également d'utiliser un mélange contenant 10 à 20% d'argile et 80 à 90% de sable. Or, des essais industriels de compactage uniaxial à 60 MPa, réalisés sur de tels mélanges, ont montré qu'à partir de 80% de sable, il n'y a plus de cohésion des pièces, même si la densité du mélange atteint presque 2,3. En conséquence, les propriétés hydro-mécaniques du matériau de colmatage sont médiocres. De plus, cet article prévoit de tasser in situ ce mélange sans toutefois donner de méthode pour le faire. Enfin, on peut supposer qu'une densification effectuée in situ exerce des contraintes beaucoup plus faibles et que les densités obtenues sont a fortiori plus faibles.

Enfin, on connaît également une technique consistant à fabriquer des briques en argile dense, en forme d'arcs de cercle qui sont disposées à l'intérieur des puits ou des galeries de stockage, autour des conteneurs contenant les déchets radioactifs, de façon à former une barrière de voisinage. Toutefois, cette technique nécessite la mise en oeuvre de moyens importants, tant pour la fabrication (presses hydrauliques à très haute pression, outillages spéciaux) que pour la mise en place. Elle s'applique, de préférence, à des ouvrages de faibles dimensions tels que les annulaires de puits de stockage dans lesquels le matériau doit posséder des facultés de colmatage très élevées.

En conséquence, l'invention a pour but de remédier aux inconvénients précités.

A cet effet, l'invention concerne un matériau de colmatage.

Selon les caractéristiques de l'invention, ce matériau comprend des granulés de colmatage à base d'argile compactée, de la famille des smectites, ces granulés présentant une densité sèche comprise entre 1,6 et 2,2 environ et un diamètre compris entre 3 et 30 mm environ.

Ce matériau de colmatage est extrêmement dense, il présente des propriétés de gonflement très intéressantes car il absorbe facilement l'eau et peut par ailleurs, développer des pressions de gonflement de plusieurs dizaines de MPa. Ainsi, ce matériau de colmatage assure une immobilisation certaine des conteneurs qui sont placés dans des sites de stockage, les protège et minimise la circulation d'eau en direction des conteneurs métalliques, ce qui a pour effet de limiter la corrosion de ceux-ci. En outre, ce matériau de colmatage a une certaine capacité à échanger des cations. Ceci est particulièrement intéressant lorsque les conteneurs contiennent des déchets radioactifs, car alors le matériau de stockage peut ralentir le transfert vers la géosphère, des radionucléides, si ceux-ci venaient à s'échapper desdits conteneurs. Ce matériau de colmatage peut également être utilisé dans un forage.

De façon avantageuse, le matériau de colmatage comprend un mélange de colmatage constitué de 40 à 70% environ des granulés précités et de 30 à 60% environ de poudre d'argile smectitique, constituée de grains d'un diamètre compris entre $5.10^{-2}$ et 5 mm environ.

Le mélange ainsi obtenu présente une meilleure répartition granulométrique des grains le constituant, et une meilleure répartition spatiale des grains les uns par rapport aux autres, ce qui a pour effet de diminuer les vides existant normalement entre les granulés lorsque la poudre d'argile est absente. On obtient ainsi une meilleure densité de foisonnement du matériau de colmatage et on améliore encore les propriétés précitées de celui-ci.

Selon une autre variante de réalisation, le matériau de colmatage comprend au moins 60% du mélange de colmatage précité et au plus 40% d'additifs choisis parmi le sable, le graphite et le granite broyé.

Ces additifs permettent de compléter les propriétés offertes par le matériau de colmatage. Le sable améliore les propriétés mécaniques du matériau, augmente sa cohésion et constitue un additif bon marché. Toutefois, il a également tendance à augmenter la perméabilité du matériau et à diminuer sa pression de gonflement. En conséquence, on en ajoutera une proportion qui variera en fonction des propriétés que l'on souhaite obtenir.

Le graphite augmente sensiblement la conductivité thermique du matériau.

Enfin, le granite broyé est un additif économique et qui, lorsqu'il est mélangé à l'argile peut permettre de diminuer le coût du mètre cube du matériau de colmatage. En outre, lorsque le site de stockage est implanté dans un massif de granite, il peut être récupéré directement sur le site et le mélange avec les granulés s'effectuera alors directement sur le site.

L'invention concerne également un procédé de fabrication de ce matériau de colmatage. Selon les caractéristiques de l'invention, ce procédé comprend les étapes consistant à :

- effectuer un compactage dynamique d'une poudre d'argile smectitique, de façon à obtenir des plaquettes d'argile d'une densité sèche comprise entre 1,6 et 2,2 environ,
- concasser lesdites plaquettes de façon à obtenir des granulés d'argile dense,
- tamiser ces granulés de façon à ne conserver que ceux dont le diamètre est compris entre 3 et 30 mm environ, afin d'obtenir ledit matériau de colmatage.

Ces techniques sont peu coûteuses, relativement faciles à mettre en oeuvre sur le plan industriel et permettent d'obtenir de grandes quantités du matériau de colmatage. On notera qu'un tel procédé de fabrication pourrait également être utilisé pour fabriquer des engrais.

Enfin, l'invention concerne également un procédé de mise en place du matériau de colmatage sur un site de stockage de conteneurs, contenant par exemple, des déchets radioactifs.

Selon les caractéristiques de l'invention, ce procédé consiste à placer ce matériau de colmatage dans les vides résiduels de ce site à l'aide de moyens de mise en place permettant de conserver l'homogénéité et la répartition granulométrique dudit matériau.

En effet, il est très important, après avoir fabriqué un matériau présentant une densité de foisonnement assez élevée, de mettre celui-ci en place dans les puits ou les galeries de stockage et autour des conteneurs, en respectant l'homogénéité du matériau obtenu. En effet, si l'on déversait depuis la surface par exemple, le matériau de colmatage à l'intérieur d'un puits de stockage, on risquerait d'avoir uniquement des grosses particules dans le bas du puits, puis des particules de plus petit diamètre dans le haut du puits. On perdrait ainsi une partie des propriétés du matériau préparé selon l'invention.

L'invention sera mieux comprise à la lecture de la description suivante d'un mode de réalisation préférentiel de l'invention donné à titre d'exemple illustratif et non limitatif, cette description étant faite en faisant référence aux dessins joints, dans lesquels :

- la figure 1 est un schéma illustrant en coupe les diverses possibilités de stockage de déchets,
- les figures 2a à 2c illustrent trois possibilités de réalisation du matériau de colmatage selon l'invention, ce dernier étant représenté en coupe,
- la figure 3 illustre les étapes successives du procédé de fabrication de ce matériau de colmatage,
- les figures 4 à 6 sont des schémas illustrant les divers procédés de mise en place du matériau de colmatage selon l'invention, à l'intérieur des sites de stockage, et
- la figure 7 est une courbe illustrant, selon une échelle logarithmique, la pression de gonflement Pg du matériau de colmatage selon l'invention, en fonction de l'inverse de la densité sèche $d_s$ de celui-ci.

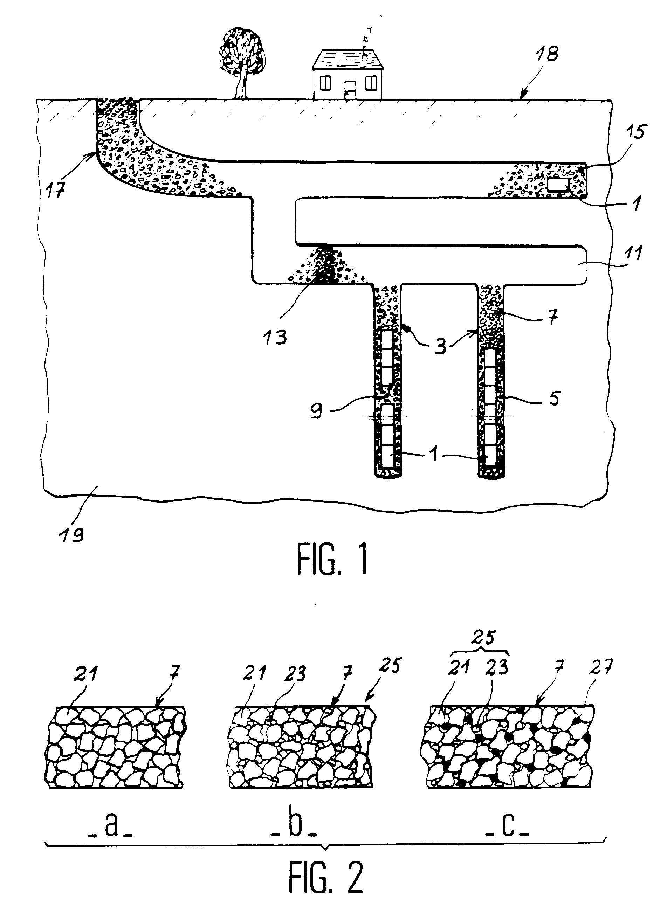

Les figures 1 à 6 ne sont que des schémas et ne sont pas représentés à l'échelle.

Le matériau de colmatage qui va maintenant être décrit est plus particulièrement destiné à être disposé autour de conteneurs contenant des déchets radioactifs, toutefois il est bien évident qu'il pourrait servir à protéger par exemple, des conteneurs contenant des déchets simplement toxiques mais non radioactifs. Il pourrait également permettre d'assurer l'étanchéité des décharges de déchets divers ou des forages de toutes sortes (pétroliers, hydrauliques, géotechniques, etc...).

Comme illustré en figure 1, il est possible de stocker les conteneurs contenant les déchets radioactifs selon plusieurs méthodes.

Une première solution consiste à stocker verticalement les conteneurs 1 qui sont d'un diamètre d'environ 80 cm à l'intérieur d'un puits de stockage 3 dont le diamètre est légèrement supérieur à celui des conteneurs (environ 1 m), puis à remplir le vide résiduel 5 laissé entre ces conteneurs et les parois du puits 3 par le matériau de colmatage 7 selon l'invention.

Une deuxième solution correspondant à une variante de la première, consiste à déposer quelques conteneurs 1 à l'intérieur du puits de stockage 3, puis à recouvrir ces conteneurs d'un bouchon 9 constitué du matériau de remplissage 7 selon l'invention, avant de procéder à un nouvel empilement de plusieurs conteneurs 1. Ce bouchon 9 peut par exemple être réalisé en fin de journée afin que les conteneurs 1 déjà installés au fond du puits ne puissent être accessibles pendant la nuit. Ces puits 3 débouchent généralement à l'intérieur de galeries horizontales 11 d'accès à ces puits. Les entrées de ces galeries 11 peuvent être bouchées par un serrement 13 constitué par une accumulation de matériau de colmatage, sur une dizaine ou une vingtaine de mètres de long.

Une troisième solution pour stocker les conteneurs 1 consiste à disposer ceux-ci dans un tunnel de stockage horizontal 15, puis à disposer autour des conteneurs, le matériau de colmatage 7 comme cela a été précédemment décrit pour les puits 3.

Enfin, le matériau de colmatage 7 peut également être destiné à boucher l'entrée 17 des galeries reliant les sites de stockage des déchets à la surface 18. Ces sites de stockage sont généralement prévus dans des sols 19 constitués d'argile ou de granite constituant une roche d'accueil.

Un premier mode de réalisation du matériau de colmatage 7 selon l'invention est illustré en figure 2a. Ce matériau comprend des granulés 21 à base d'argile smectitique compactée, ces granulés présentant une densité sèche comprise entre 1,6 et 2,2 environ, (2 en moyenne) et un diamètre compris entre 3 et 30 mm environ.

Les argiles smectitiques sont connues pour leurs propriétés de gonflement lorsqu'elles sont mélangées à de l'eau. Toutefois, on ne connaissait pas jusqu'à présent d'argile se présentant sous une forme aussi dense, puisque la poudre d'argile utilisée actuellement comme matériau de colmatage présentait une densité de foisonnement de 1,1 à 1,2 seulement. La haute densité sèche de chacun de ces granulés (voisine de 2) permet d'obtenir une densité de foisonnement du matériau de colmatage global d'environ 1,4 permettant en le compactant légèrement d'atteindre une densité de foisonnement d'environ 1,7, ce qui est en fait un très bon produit.

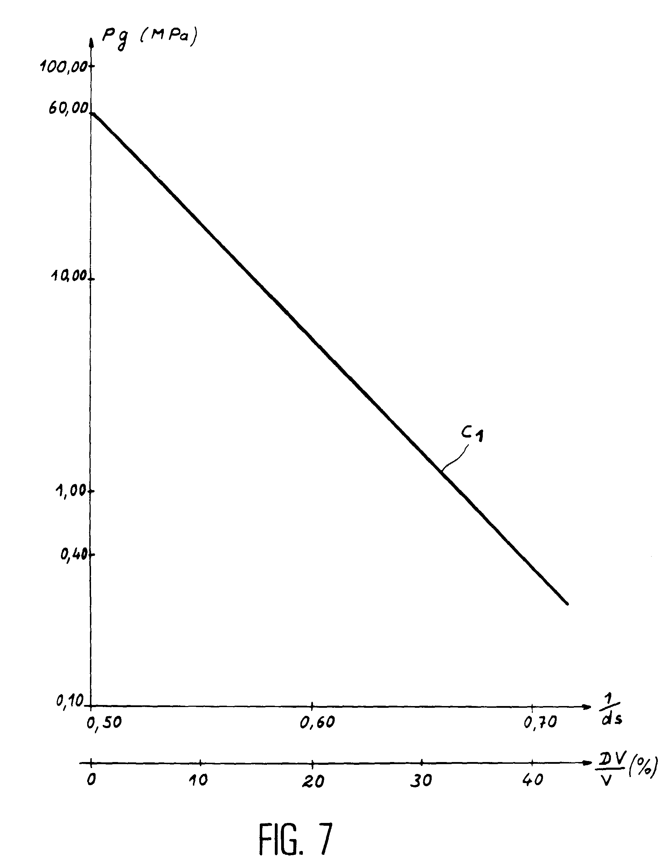

La courbe C1 de la figure 7 illustre la pression de gonflement Pg exercée par le matériau (c'est-à-dire les contraintes exercées sur les parois des conteneurs et du puits), en fonction de l'inverse de sa densité sèche $d_s$. On a également représenté son gonflement relatif DV/V. La figure 7 est réalisée sur une échelle logarithmique. Plus la densité sèche $d_s$ est élevée, plus la pression de gonflement $P_g$ l'est également et plus le matériau aura la capacité de gonfler une fois hydraté. L'aptitude au gonflement du matériau permet à celui-ci d'occuper tout l'espace résiduel disponible, au fur et à mesure de son hydratation.

Un échantillon de densité sèche $d_{s1}$, atteint une fois hydraté, une densité "sèche" $d_{s2}$. On montre que $DV/V = (V_2 - V_1) V_1$ en volume, soit $DV/V = (d_{s1}/d_{s2}) - 1$.

A titre d'exemple purement illustratif, on constate sur la figure 7, que si un échantillon a une densité sèche $d_{s1}$ de 2,00 ($1/d_{s1} = 0,5$), il exerce une pression de gonflement Pg de 60 MPa. De plus, en présence d'eau, il peut gonfler de 40%, sa densité sèche $d_{s2}$ n'est alors plus que de 1,43 tandis que sa pression de gonflement est encore de 0,4 MPa.

En outre, le fait d'avoir sélectionné des granulés dont le diamètre est compris entre 3 et 30 mm permet d'avoir une bonne répartition spatiale des granulés, les uns par rapport aux autres, lorsqu'ils sont placés sur le site de stockage.

De façon avantageuse, les proportions des grains de différents diamètres sont sensiblement voisines. En d'autres termes, on a une répartition équiprobable de tous les grains dans un domaine borné. Le matériau de colmatage ainsi obtenu a une bonne compacité et ses grains se mettent en place sans ségrégation.

Les argiles de la famille des smectites, (connues également sous le nom commercial de Bentonite) comprennent notamment la montmorillonite et la béidellite.

Divers essais ont été réalisés sur des argiles différentes afin de fabriquer les granulés selon l'invention. Ainsi, on a fabriqué des granulés compactés, à base de montmorillonite provenant du bassin d'Almeria (dénommée S2) et à base de béidellite extraite dans le bassin parisien (dénommée FoCa). Ces argiles sont tout à fait adaptées à la fabrication du matériau de colmatage selon l'invention.

Des essais ont également été effectués sur une argile belge provenant du laboratoire souterrain de MOL (argile de BOOM, dénommée BC). Cette argile est constituée d'un mélange de smectite et d'autres argiles telles que la kaolinite, la vermicullite et la chlorite. Cette argile est d'un peu moins bonne qualité une fois qu'elle est compactée puisqu'elle est constituée d'un mélange d'argiles qui ne sont pas toutes des argiles gonflantes. Toutefois, elle est moins coûteuse et peut être utilisée pour remplir les galeries d'accès 11 ou 17 (voir figure 1), où les contraintes exigées sont moins élevées et où les quantités nécessaires sont très importantes (quelques centaines de tonnes). Inversement, les argiles espagnole et française seront plutôt utilisées pour remplir des puits 3 ou des tunnels de stockage 15.

Un second mode de réalisation du matériau de colmatage selon l'invention est illustré en figure 2b. Ce matériau est constitué d'un mélange de colmatage, comprenant 40 à 70% environ des granulés d'argile compactée 21, précédemment décrits et 30 à 60% environ de poudre d'argile smectitique dont les grains 23 ont un diamètre généralement inférieur à 5 mm et plus précisément compris entre 50 µm et 5 mm. La densité de foisonnement de cette poudre d'argile 23, à l'état libre est d'environ 1,1 à 1,2. Le mélange de colmatage 25 réalisé avec cette poudre 23 et les granulés 21 dont la densité moyenne est de 2, présente une densité de foisonnement globale de 1,6 à 1,7. Ceci s'explique par le fait que les grains de poudre 23 se disposent géométriquement dans les espaces vides existant entre les granulés voisins. Ceci permet d'atteindre des pressions de gonflement allant jusqu'à une dizaine de MPa.

La figure 2c illustre une troisième variante de réalisation du matériau de colmatage selon l'invention qui comprend au moins 60% du mélange 25 de granulés 21 et de poudre 23 illustré en figure 2b et au plus 40% d'additifs 27. Ces additifs sont constitués par des matériaux tels que le sable, le graphite ou le granite broyé, par exemple, qui permettent de modifier les propriétés du matériau de colmatage final comme cela a déjà été décrit précédemment dans l'introduction.

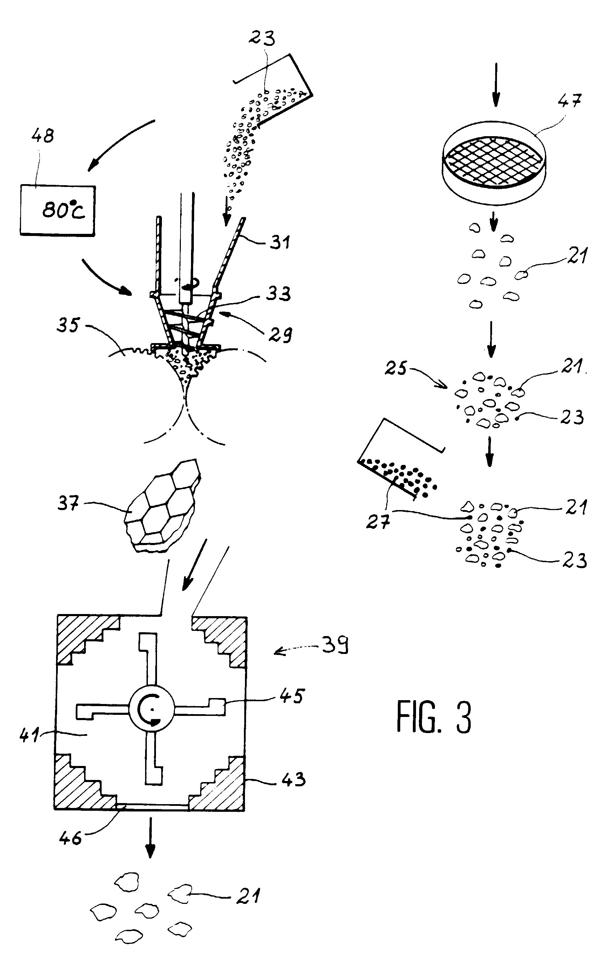

La figure 3 illustre un mode de réalisation du procédé de fabrication du matériau de colmatage selon l'invention. Ce procédé consiste à utiliser la poudre d'argile smectitique 23 comme produit de départ et à la soumettre à une étape de compactage dynamique à l'intérieur d'un compacteur à roues tangentes 29. Ce compacteur 29 est constitué d'une trémie d'alimentation 31, à l'intérieur de laquelle est placée une vis d'Archimède 33 permettant de densifier la poudre d'argile 23. Celle-ci une fois densifiée, s'écoule entre deux roues tangentes 35 dont la surface extérieure est pourvue d'alvéoles. La poudre d'argile densifiée, en s'écoulant entre ces deux roues 35 est agglomérée par la pression exercée par ces roues, de façon à former des plaquettes d'argile 37 d'une densité sèche comprise entre 1,6 et 2,2. Ces plaquettes sont de formes irrégulières et de dimensions d'environ 10 cm de long, 5 à 6 cm de large et d'une épaisseur de 1 à 2 cm. Le compacteur à roues tangentes 29 est par exemple l'un de ceux fabriqués par la Société SAHUT-CONREUR et Cie, localisée à Raismes (France).

Les plaquettes 37 obtenues sont ensuite concassées par exemple dans un broyeur à marteau 39. Ce broyeur comprend généralement une enceinte 41 délimitée par des parois 43 formant enclume et une roue centrale rotative portant des marteaux 45. Ces marteaux projettent les plaquettes 37 sur les parois 43 afin de les broyer et de former les granulés 21. Ce broyeur à marteau 39 peut également comprendre en sortie, une grille 46 permettant de ne laisser passer que des granulés d'une certaine taille.

Toutefois, il est généralement nécessaire de réaliser une troisième étape de tamisage 47 afin de ne retenir parmi les granulés 21 obtenus que ceux dont le diamètre est compris entre 3 et 30 mm. Le matériau de compactage obtenu comprend les granulés 21 qui, lorsqu'ils seront disposés à l'intérieur du site de stockage, auront la disposition illustrée en figure 2a.

Par ailleurs, il est également possible d'ajouter une étape supplémentaire de séchage 48 de la poudre d'argile 23 avant que celle-ci ne pénètre dans le concasseur à roues tangentes 29. Cette étape de séchage permet de déshydrater l'argile, en la portant, pendant quelques heures, à 80°C jusqu'à une valeur résiduelle de la teneur en eau, pouvant atteindre 5% pour l'argile FoCa et seulement 2% pour l'argile S2, tout en conservant la faculté de compactage et de densification de celle-ci. En dessous de ces valeurs, le matériau se feuillette au compactage et par conséquent, se densifie moins bien. Le séchage a pour avantage d'augmenter significativement la densité sèche des granulés d'argile 21. En effet, on sait que :

$$d_A = d_S/1+w,$$

$d_A$ représentant la densité apparente de l'argile, c'est-à-dire sa masse totale par rapport à son volume apparent ; $d_S$ représentant la densité sèche, c'est-à-dire la masse sèche de l'argile par rapport à son volume apparent et w représente la teneur en eau, c'est-à-dire la masse d'eau par rapport à la masse sèche d'argile.

Dans la mesure où l'on observe que la densité apparente atteinte par ce procédé est sensiblement constante quelle que soit sa teneur en eau et tant que celle-ci reste dans les limites où les plaquettes ne se feuillettent pas encore, la phase de séchage permet d'augmenter la densité sèche ds du produit.

A titre d'exemple illustratif, on a constaté après avoir déshydraté l'argile espagnole que la teneur en eau de celle-ci passait de 12% au départ à 2%. La même expérience réalisée sur l'argile française permettait de diminuer la teneur en eau de 10% à 5%. Au-delà de ces valeurs minimum, une diminution de la teneur en eau n'augmente pas significativement la densité sèche du produit.

Toutefois, cette opération de séchage 48 étant coûteuse, elle sera réalisée uniquement lorsque l'on souhaite obtenir une très forte densité du granulé 21 final.

Le matériau de colmatage obtenu à l'issue du tamisage est constitué uniquement des grains d'argile compactée 21 et constitue le premier mode de réalisation du matériau de colmatage selon l'invention. Ces granulés 21 peuvent ensuite être mélangés soit avec la poudre d'argile 23 de départ pour former le mélange 25, soit avec les additifs 27 précités, dans des proportions précédemment décrites, de façon à obtenir les matériaux de colmatage illustrés respectivement aux figures 2b et 2c. Les techniques de mélange sont classiques.

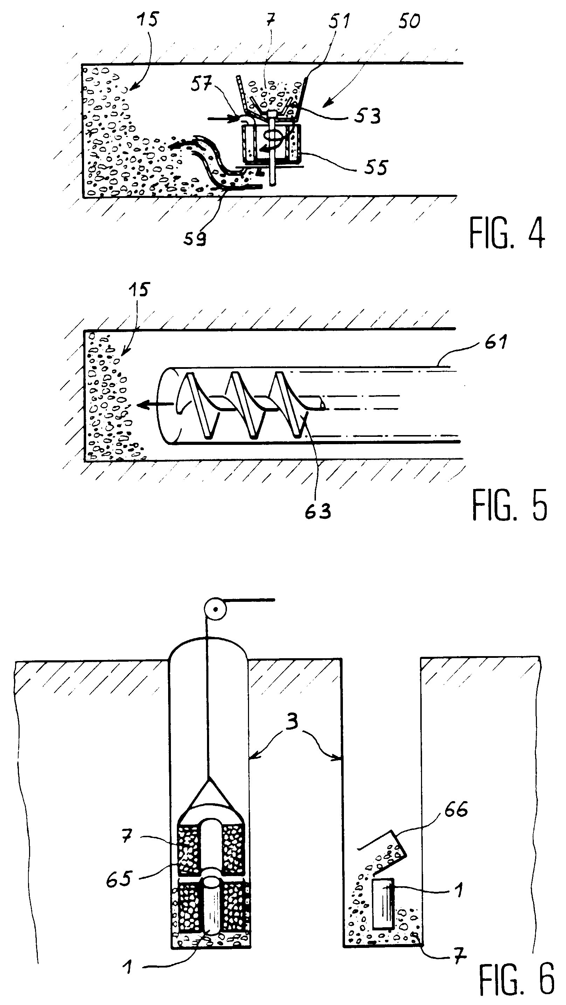

Les figures 4 à 6 illustrent divers procédés de mise en place du matériau de colmatage selon l'invention. Ces procédés de colmatage doivent permettre la mise en place du matériau sur le site de stockage tout en conservant l'homogénéité et la répartition granulométrique du matériau qui sont justement à la base de ses excellentes propriétés.

A cet effet, le mélange de granulés de base 21 avec les grains 23 de poudre d'argile ou les grains d'additifs 27 peut se faire soit directement sur le site, soit dans l'usine de fabrication.

Deux techniques permettent la mise en place continue du matériau de colmatage sur le site de stockage, le mélange étant effectué directement sur ce site. La figure 4 illustre ainsi un premier mode de réalisation de ce procédé consistant à utiliser la projection au canon par l'intermédiaire d'une pompe à air comprimé 50. Cette technique est de préférence utilisée lorsque le site se présente sous forme de tunnels de stockage. De façon classique, cette pompe à air comprimé 50 comprend un entonnoir de remplissage 51 dans lequel on introduit les divers constituants du matériau de colmatage 7. Cet entonnoir comprend un mélangeur 53 qui assure le mélange des différents constituants. Un rotor 55 est disposé sous l'entonnoir de remplissage 51 et une entrée d'air comprimé 57 est prévue dans la partie supérieure de ce rotor. Le rotor 55 tourne et se remplit dans sa partie supérieure du matériau de colmatage 7 provenant de l'entonnoir 53 et l'air comprimé permet de chasser ce mélange de colmatage, par l'intermédiaire d'une buse 59, en direction de l'intérieur du tunnel de stockage 15. Cette pompe à air comprimé 50 est connue de l'homme du métier et ne sera pas décrite plus en détail.

La figure 5 illustre un second mode de réalisation du procédé de mise en place du matériau de colmatage selon l'invention, ce procédé étant destiné également à être utilisé dans les tunnels de stockage 15. Les constituants du matériau de colmatage 7 sont amenés dans ce cas sur le site de stockage où ils sont mélangés (dans une trémie non représentée, par exemple). Le matériau 7 est ensuite mené jusqu'au point où il doit être déposé, par l'intermédiaire d'un tuyau souple 61 dans lequel tourne une vis d'Archimède 63. Cette technique de déplacement de granulés, connue en soi, permet d'amener le matériau sur le site, sans modifier sa composition et sa répartition granulométrique.

Enfin, la figure 6 illustre deux techniques de mise en place discontinue du matériau de colmatage, utilisées plus particulièrement lors du stockage en puits 3. Dans ce cas, le matériau de colmatage 7 est introduit dans un panier métallique annulaire 65, où il y est même éventuellement densifié. Les paniers 65 sont ensuite descendus successivement à l'intérieur du puits de stockage et le conteneur 1 contenant les déchets radioactifs est introduit au centre du panier. Dans cette première variante de réalisation, le panier 65 reste à l'intérieur du puits de stockage. Il est également possible d'utiliser un panier 66 de forme quelconque et de le remplir du matériau de colmatage 7 selon l'invention, puis de le descendre au fond du puits 3 où les conteneurs 1 ont déjà été stockés. Ensuite, ce panier 66 est renversé de façon à vider son contenu entre le conteneur 1 et les parois du puits. Ce renversement du panier s'effectuant au fond du puits permet de conserver sensiblement l'homogénéité et la répartition granulométrique du matériau, ce qui ne serait pas le cas si le mélange était versé directement depuis le haut du puits.

Dans le cas où l'on souhaite utiliser le matériau de colmatage 7 pour boucher un forage, on peut également, en surface, remplir des cartouches cylindriques du mélange puis les descendre une à une dans le forage.

Enfin, dans le cas où l'on souhaite boucher un forage en déversant le matériau de colmatage 7 depuis la tête du puits, on s'arrangera pour que les grains présentent un diamètre moyen relativement constant.

## Revendications

1. Matériau de colmatage, caractérisé en ce qu'il comprend des granulés de colmatage (21) à base d'argile compactée, de la famille des smectites, ces granulés (21) présentant une densité sèche comprise entre 1,6 et 2,2 environ et un diamètre compris entre 3 et 30 mm environ.

**2.** Matériau de colmatage selon la revendication 1, caractérisé en ce qu'il comprend un mélange de colmatage (25) constitué de 40 à 70% environ des granulés de colmatage (21) et de 30 à 60% environ de poudre d'argile smectitique (23) constituée de grains d'un diamètre compris entre $5.10^{-2}$ et 5 mm environ.

**3.** Matériau de colmatage selon la revendication 2, caractérisé en ce qu'il comprend au moins 60% du mélange de colmatage (25) et au plus 40% d'additifs (27) choisis parmi le sable, le graphite et le granite broyé.

**4.** Procédé de fabrication d'un matériau de colmatage selon la revendication 1, caractérisé en ce qu'il comprend les étapes consistant à :

- effectuer un compactage dynamique (29) d'une poudre d'argile smectitique (23), de façon à obtenir des plaquettes d'argile (37) d'une densité sèche comprise entre 1,6 et 2,2 environ,
- concasser lesdites plaquettes (37) de façon à obtenir des granulés d'argile dense (21),
- tamiser ces granulés (21) de façon à ne conserver que ceux dont le diamètre est compris entre 3 et 30 mm environ, afin d'obtenir ledit matériau de colmatage (7).

**5.** Procédé de fabrication selon la revendication 4, caractérisé en ce que l'on sèche la poudre d'argile (23) avant l'étape de compactage, de façon à ce que celle-ci présente une teneur en eau minimum et compatible avec sa densification.

**6.** Procédé de fabrication selon la revendication 4 du matériau de colmatage selon la revendication 2, caractérisé en ce qu'il comprend l'étape supplémentaire consistant à :

- mélanger entre 40 et 70% environ des granulés (21) obtenus après tamisage avec 30 à 60% environ de poudre d'argile smectitique (23) dont les grains ont un diamètre compris entre $5.10^{-2}$ et 5 mm environ.

**7.** Procédé de fabrication selon la revendication 4 du matériau de colmatage selon la revendication 3, caractérisé en ce qu'il comprend les étapes supplémentaires consistant à :

- mélanger entre 40 et 70% environ des granulés (21) obtenus après tamisage avec 30 à 60% environ de poudre d'argile smectitique (23) dont les grains ont un diamètre compris entre $5.10^{-2}$ et 5 mm environ,
- mélanger au moins 60% du mélange (25) obtenu avec au plus 40% d'additifs (27) choisis parmi le sable, le graphite ou la poudre de granite.

**8.** Procédé de mise en place du matériau de colmatage selon l'une des revendications 1 à 3, sur un site de stockage de conteneurs (1), caractérisé en ce qu'il consiste à placer ce matériau de colmatage (7) dans les vides résiduels (5) de ce site, à l'aide de moyens de mise en place permettant de conserver l'homogénéité et la répartition granulométrique dudit matériau.

**9.** Procédé de mise en place selon la revendication 8, caractérisé en ce que le matériau de colmatage (7) est disposé dans les vides résiduels grâce à une pompe à air comprimé (50).

**10.** Procédé de mise en place selon la revendication 8, caractérisé en ce que le matériau de colmatage (7) est amené depuis la surface jusqu'au vide résiduel par un tuyau (61) dans lequel tourne une vis d'Archimède (63).

**11.** Procédé de mise en place selon la revendication 8, caractérisé en ce que l'on remplit des paniers annulaires (65) du matériau de colmatage (7), en ce qu'on les stocke pleins à l'intérieur du vide résiduel et en ce qu'on entrepose les conteneurs (1) au centre desdits paniers annulaires (65).

**12.** Procédé de mise en place selon la revendication 8, caractérisé en ce que l'on remplit des paniers (66) en surface, du matériau de colmatage (7) et en ce qu'on les transporte dans les vides résiduels où on les y vide.

**13.** Procédé de mise en place selon la revendication 9, caractérisé en ce que les conteneurs (1) contiennent des déchets radioactifs.


**Patentansprüche**

**1.** Verstopfungsmaterial, **dadurch gekennzeichnet**, daß es Verstopfungsgranulat bzw. -körner (21) auf der Basis von verdichtetem Ton aus der Gruppe der Bentonite umfaßt, wobei diese Körner (21) eine Trockendichte enthalten zwischen ungefähr 1,6 und 2,2 aufweisen und einen Durchmesser enthalten zwischen ungefähr 3 und 30 mm.

**2.** Verstopfungsmaterial nach Anspruch 1, dadurch gekennzeichnet, daß es eine Verstopfungsmischung (25) umfaßt, gebildet durch ungefähr 40 bis 70% Verstopfungsgranulat (21) und ungefähr 30 bis 60% Bentonitpulver (23), gebildet durch Körnchen mit einem ungefähr zwischen $5.10^{-2}$ und 5 mm enthaltenen Durchmesser.

3. Verstopfungsmaterial nach Anspruch 2, dadurch gekennzeichnet, daß es wenigstens 60% der Verstopfungsmischung (25) enthält und wenigstens 40% Zusatzstoffe (27), ausgewählt unter Sand, Graphit und gemahlenem Granit.

4. Herstellungsverfahren eines Verstopfungsmaterials nach Anspruch 1, dadurch gekennzeichnet, daß es die folgenden Schritte umfaßt:

- Durchführen einer dynamischen Verdichtung (29) eines Bentonitpulvers (23), um Tonplatten (37) einer Trockendichte enthalten zwischen ungefähr 1,6 und 2,2 herzustellen,
- Brechen dieser Platten (37), um dichtes Tongranulat (21) zu erhalten,
- Sieben dieses Granulats (21), um nur dasjenige zurückzubehalten, dessen Durchmesser enthalten ist zwischen ungefähr 3 und 30 mm, um besagtes Verstopfungsmaterial (7) herzustellen.

5. Herstellungsverfahren nach Anspruch 4, dadurch gekennzeichnet, daß man das Tonpulver (23) vor dem Verdichtungsschritt trocknet, damit dieses einen minimalen und mit seiner Verdichtung kompatiblen Wassergehalt aufweist.

6. Verfahren nach Anspruch 4 zur Herstellung des Verstopfungsmaterials nach Anspruch 2, dadurch gekennzeichnet, daß es folgenden zusätzlichen Schritt umfaßt:
- Mischen von ungefähr zwischen 40 und 70% des nach dem Sieben erhaltenen Granulats (21) mit ungefähr 30 bis 60% Bentonitpulver (23), dessen Körnchen einen ungefähr zwischen $5.10^{-2}$ und 5 mm enthaltenen Durchmesser haben,

7. Verfahren nach Anspruch 4 zur Herstellung des Verstopfungsmaterials nach Anspruch 3, dadurch gekennzeichnet, daß es folgende zusätzliche Schritte umfaßt:

- Mischen von ungefähr zwischen 40 und 70% des nach dem Sieben erhaltenen Granulats (21) mit ungefähr 30 bis 60% Bentonitpulver (23), dessen Körnchen einen ungefähr zwischen $5.10^{-2}$ und 5 mm enthaltenen Durchmesser haben,
- Mischen von wenigstens 60% der erhaltenen Mischung (25) mit höchstens 40% Zusatzstoffen (27), ausgewählt unter Sand, Graphit oder Granitpulver.

8. Verfahren zum Einbringen des Verstopfungsmaterials nach einem der Ansprüche 1 bis 3 in eine Lagerstätte für Behälter (1), **dadurch gekennzeichnet**, daß es darin besteht, die restlichen Hohlräumen (5) dieser Lagerstätte mit diesem Verstopfungsmaterial (7) zu füllen mittels Fülleinrichtungen, die eine Wahrung der Homogenität und der granulometrischen Verteilung des besagten Materials ermöglichen.

9. Verfahren zum Einbringen des Verstopfungsmaterials nach Anspruch 8, dadurch gekennzeichnet, daß das Verstopfungsmaterial (7) mittels einer Druckluftpumpe (50) in die restlichen Hohlräume eingebracht wird.

10. Verfahren zum Einbringen nach Anspruch 8, dadurch gekennzeichnet, daß das Verstopfungsmaterial (7) von der Oberfläche zum restlichen Hohlraum gebracht wird mittels eines Rohrs (61), in dem sich eine archimedische Schnecke (63) dreht.

11. Verfahren zum Einbringen nach Anspruch 8, dadurch gekennzeichnet, daß man ringformige Körbe (65) mit dem Verstopfungsmaterial (7) füllt, daß man sie gefüllt im Innern des restlichen Hohlraums lagert und daß man die Behälter (1) im Zentrum von besagten ringförmigen Körben (65) lagert bzw. zwischenlagert.

12. Verfahren zum Einbringen nach Anspruch 8, dadurch gekennzeichnet, daß man Körbe (66) an der Oberfläche mit dem Verstopfungsmaterial (7) füllt und daß man sie in die restlichen Hohlräume transportiert, wo man sie ausleert.

13. Verfahren zum Einbringen nach Anspruch 9, dadurch gekennzeichnet, daß die Behälter (1) radioaktive Abfälle enthalten.

**Claims**

1. Clogging material, characterized in that it includes compacted clay-based clogging granulates (21) from the family of smectites, said granulates (21) having a dry density of between approximately 1.6 and 2.2 and approximately a diameter of between 3 and 30 mm.

2. Clogging material according to claim 1, characterized in that it includes a clogging mixture (25) made up of approximately 40 to 70% of clogging granulates (21) and approximately 30 to 60% of smectic clay powder formed of grains with a diameter of approximately between $5.10^{-2}$ and 5 mm.

3. Clogging material according to claim 2, characterized in that it includes at least 50% of the clogging mixture (25) and at the most 40% of additives (27) selected from sand, graphite and ground granite.

**4.** Method for producing a clogging material according to claim 1, characterized in that it includes the following stages :

- dynamically compacting (29) a smectic clay powder (23) so as to obtain clay plates (37) with a dry density of approximately between 1.6 and 2.2,

- crushing said plates (37) so as to obtain dense clay granulates (21),

- sieving these granulates (21) so as to only retain those whose diameter is approximately between 3 and 30 mm so as to obtain said clogging material (7).

**5.** Production method according to claim 4, characterized in that the clay powder (23) is dried prior to the compacting stage so that this powder has a minimum water content and is compatible with its densification.

**6.** Production method according to claim 4 of the clogging material according to claim 2, characterized in that it includes an additional stage consisting of :
- mixing between approximately 40 and 70% of the granulates (21) obtained after sieving with approximately 30 to 60% of the smectic clay powder (23) whose grains have a diameter of approximately between $5.10^{-2}$ and 5 mm.

**7.** Production method according to claim 4 of the clogging material according to claim 3, characterized in that it includes the additional stages consisting of :

- mixing between approximately 40 and 70% of the granulates (21) obtained after sieving with approximately 30 to 60% of the smectic clay powder (23) with grains having a diameter of approximately between $5.10^{-2}$ and 5 mm,

- mixing at least 60% of the mixture (25) obtained with at the most 40% of additives (27) selected from sand, graphite or granite powder.

**8.** Method for placing the clogging material according to any one of claims 1 to 3 on a site for storing containers (1), characterized in that it consists of placing this clogging material (7) in the residual hollow spaces (5) of this site with the aid of placing means able to retain the homogeneity and granulometric distribution of said material.

**9.** Placing method according to claim 8, characterized in that the clogging material (7) is disposed in the residual hollow spaces by means of a compressed air pump (50).

**10.** Placing method according to claim 8, characterized in that the clogging material (7) is brought from the surface as far as the residual hollow space by means of a pipe (61) in which an Archimedean screw (63) rotates.

**11.** Placing method according to claim 8, characterized in that annular baskets (65) are filled with the clogging material (7), wherein they are stored inside the residual hollow space and in that the containers are placed at the centre of said annular baskets (65).

**12.** Placing method according to claim 8, characterized in that the baskets (66) are filled on the surface with the clogging material (1) and in that they are transported into the residual hollow spaces where they are emptied.

**13.** Placing method according to claim 9, characterized in that the containers (1) contain radioactive waste.

FIG. 1

_a_     _b_     _c_

FIG. 2

FIG. 3

FIG. 4

FIG. 5

FIG. 6

FIG. 7